# EUROPÄISCHE PATENTSCHRIFT

(11) **EP 0 591 227 B1**
(45) Veröffentlichungstag und Bekanntmachung des Hinweises auf die Patenterteilung: **21.06.1995**
(21) Anmeldenummer: 92908406.9
(22) Anmeldetag: 10.04.1992
(51) Int. Cl.: B62D 25/20, B62D 27/02, B62D 29/00

(54) **VERFAHREN ZUR REPARATUR EINER FAHRZEUGKAROSSERIE AUS KNOTENELEMENTEN UND HOHLPROFILTRÄGERN**
PROCESS FOR REPAIRING VEHICLE COACHWORK CONSISTING OF NODAL COMPONENTS AND HOLLOW SECTION BEARERS
PROCEDE DE REPARATION DE CARROSSERIES DE VEHICULES COMPOSEES D'ELEMENTS NODAUX ET PROFILES CREUX DE SUPPORT

(30) Priorität: 25.06.1991 DE 4120844
(43) Veröffentlichungstag der Anmeldung: 13.04.1994
(73) Patentinhaber: AUDI AG, 85002 Ingolstadt (DE)
(72) Erfinder: BORA, Viorel, D-8070 Ingolstadt (DE)
(74) Vertreter: Engelhardt, Harald
(86) Internationale Anmeldenummer: EP9200817
(87) Internationale Veröffentlichungsnummer: WO9300245

(56) Entgegenhaltungen:
- DE-A- 3 811 427
- FR-A- 2 093 444
- GB-A- 356 305
- PATENT ABSTRACTS OF JAPAN, Band 014, Nr. 262 (M-0981), 6. Juni 1990 & JP-A-2 074 475 (MAZDA) 14. März 1990
- PATENT ABSTACTS OF JAPAN, Band 008, Nr. 170 (M-315), 7. August 1984 & JP-A-59 063 411 (ISHIKAWAJIMA HARIMA JUKOGYO) 11. April 1984

## Beschreibung

Die Erfindung betrifft ein Verfahren zur Reparatur einer Fahrzeugkarosserie aus Knotenelementen und Hohlprofilträgern nach dem Oberbegriff des Anspruchs 1.

Zum Aufbau selbsttragender Karosserien werden im Tiefziehverfahren verformte Stahlbleche verwendet. Träger mit Hohlprofilen werden dabei jeweils aus wenigstens zwei tiefgezogenen und miteinander verschweißten Blechen hergestellt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Für Kleinserien ist eine solche Karosserieherstellung aufgrund der hohen erforderlichen Werkzeuginvestitionen sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

Bei Aufprallunfällen werden Karosseriebereiche meist verformt und müssen wieder in ihren ursprünglichen Zustand gebracht werden. Bei Karosserien aus Blechteilen ist dies relativ einfach, da verformte Blechteile, beispielsweise auf einer Richtbank, wieder zurückgeformt oder durch Einschweißen von neuen Ersatzblechteilen ausgewechselt werden können.

Bei einer Karosserie aus Leichtmetall-Knotenelementen und Leichtmetall-Strangprofilen aus Aluminium ist dagegen eine Reparatur verformter Trägerteile aus mehreren Gründen nicht in der gleichen Weise möglich:

Ein Trägerteil aus Aluminium darf nicht oder nur in geringem Maße rückgeformt werden, da sonst durch Änderungen der Materialstruktur die Festigkeit unzulässig herabgesetzt wird. Die bei Blechkarosserien üblichen Rückformungen auf einer Richtbank sind daher nicht oder nur in einem eng begrenztem Umfang möglich.

Es wäre denkbar, Trägerteile zwischen zwei Knotenelementen insgesamt auszuwechseln, indem die Schweißnähte zwischen Trägerteil und zugeordnetem Knotenelement aufgetrennt werden und ein entsprechendes, komplettes Ersatzträgerteil eingesetzt wird. Diese Vorgehensweise würde der beim Auswechseln eines Blechteils an einer Blechkarosserie entsprechen. Es ist jedoch bekannt, daß durch die hohen Temperaturen beim Schweißvorgang eine Änderung der Materialstruktur hervorgerufen wird, die die Festigkeit im Bereich der Schweißverbindung herabsetzt. Eine besonders große und ungünstige Reduzierung der Festigkeit erfolgt dann, wenn mehrmals an derselben Stelle geschweißt wird. Daher ist der Austausch des gesamten Strangprofilträgers an den Knotenelementen wegen der dann erforderlichen, erneuten Schweißung an derselben Stelle ungünstig und problematisch.

Weiter wäre es denkbar, nur einen Teil eines Trägers im Bereich der Verformung herauszuschneiden, ein entsprechend unverformtes Teil einzusetzen und durch eine "stumpfe" Schweißung zu verbinden. Eine solche Schweißung ist insbesondere in einer Werkstatt nur schwierig und nicht sicher genug durchzuführen. Zudem ist es erforderlich, nach dem Schweißvorgang wieder eine glatte Außenkontur herzustellen, so daß dann wieder ein Teil der (aufgewölbten) Schweißnaht weggeschliffen werden müßte. Aus dem gleichen Grund ist es auch nicht möglich, andere, an sich bekannte, stabile Verbindungsarten, wie Überlappungen von Trägerbereichen oder äußere Muffenverbindungen, vorzusehen.

Aufgabe der Erfindung ist es, ein Verfahren zur Reparatur einer Fahrzeugkarosserie aus Knotenelementen und Hohlprofilträgern vorzuschlagen, mit dem insbesondere an Leichtmetall-Karosserien verformte Teile ohne Festigkeitsverlust ausgewechselt werden können.

Diese Aufgabe wird mit den Merkmalen des Anspruchs 1 gelöst.

Gemäß Anspruch 1 wird ein beschädigtes bzw. verformtes Trägerteil eines Hohlprofilträgers zwischen zwei Knotenelementen und im Abstand vom jeweiligen Knotenelement abgetrennt und entfernt. Dadurch verbleibt an jedem Knotenelement ein Trägerstutzen des ursprünglichen Hohlprofilträgers. Zwischen diesen Trägerstutzen erstreckt sich ein Freiraum in der Länge des entfernten Trägerteils.

Die Abtrennung des Trägerteils erfolgt in der Weise, daß durch entsprechende Anbringung der Trennschnitte der Freiraum gegenüber dem Längsverlauf des Hohlprofilträgers konisch zu einer zugänglichen Seite hin, insbesondere zur Karosserieaußenseite hin, offen ist.

In die Trägerstutzen werden kurze Muffenstücke eingesteckt, die in ihrem Außenprofil dem Innenprofil der Trägerstutzen entsprechen und somit weitgehend formschlüssig gehalten sind. Diese Muffenstücke ragen mit einem Teilbereich in den jeweiligen Trägerstutzen und stehen mit dem anderen Teilbereich aus dem Trägerstutzen vor.

Weiter wird ein Ersatzträgerteil vorbereitet, das in seiner Länge dem Freiraum entspricht und an den Endseiten die negative Form der Trennstellen bzw. der Trägerstutzenenden aufweist. Dieses Ersatzträgerteil wird von der konisch offenen Seite des Freiraums her in diesen weitgehend formschlüssig eingesetzt. Dazu sind die Muffenstücke mit ihrem vorstehenden Teil im Rahmen ihrer Einstecktoleranzen zu verkippen, um das Einsetzen bzw. Einschieben des Ersatzträgerteils zu ermöglichen. Nach dem Einsetzen des Ersatzträgerteils bilden die Muffenstücke jeweils im Bereich des Spaltes zwischen dem Ersatzträgerteil und den Trägerstutzen eine umlaufende Unterlage in der Art einer Innenmuffe. Um beim Einsetzen des Ersatzträgerteils ein Verschieben der Muffenstücke in die Trägerstutzen hinein zu verhindern, können dort an der Innenseite Schweißpunkte als Anschläge angebracht werden.

Anschließend wird entlang des jeweiligen Spaltes eine Schweißnaht angebracht, die jeweils den Trägerstutzen, das darunter liegende Muffenstück und das Ersatzträgerteil verbindet. Eine solche, mit dem jeweiligen Muffenstück unterlegte Schweißnaht ist relativ einfach mit hoher Festigkeit anbringbar, da das Muffenstück als Brücke zwischen den Trägerteilen mitverwendet wird. Die Schweißnaht kann im Spalt etwa in der Dicke der Trägermaterialstärke angebracht werden, so daß sie nach außen praktisch nicht vorsteht und damit eine glatte Außenkontur erzielbar ist, ohne daß viel und aufwendig bei gleichzeitiger Abtragung der Schweißnaht geschliffen werden muß.

Da ein verformtes Trägerteil insgesamt durch ein neues Trägerteil ersetzt wird, ist eine Rückformung, z.B. auf einer Richtbank, mit den bekannten Festigkeitsverlusten nicht erforderlich. Zudem liegen die neuen Schweißverbindungen jeweils in einem Abstand zum Knotenelement an Stellen, wo vorher noch keine Schweißung erfolgt ist, so daß eine Festigkeitsreduzierung durch Mehrfachschweißung nicht gegeben ist. Das erfindungsgemäße Verfahren ist zudem so einfach und sicher durchführbar, daß es ohne Schwierigkeiten mit üblichen Werkstattmitteln ausgeführt werden kann.

Nach Anspruch 2 ist das erfindungsgemäße Verfahren besonders vorteilhaft dann zu verwenden, wenn die Hohlprofilträger Strangprofile aus Leichtmetall, insbesondere aus einer Aluminiumlegierung und entsprechend die Knotenelemente Gußteile aus Leichtmetall sind.

Besonders gefährdet sind bei Fahrzeugkollisionen von der Seite her die seitlichen Schweller, die relativ lange Trägerteile darstellen. Gerade bei Verformungen dieser Schweller ist das erfindungsgemäße Verfahren vorteilhaft einsetzbar. Grundsätzlich können jedoch auch andere Tragerteile zwischen oder im Anschluß an Knotenelemente nach dem erfindungsgemäßen Verfahren ausgewechselt werden.

Für einen günstigen Schweißvorgang ist es nach Anspruch 4 vorteilhaft, das Ersatzträgerteil so abzuschneiden, daß zu beiden Endseiten zu den Trägerstutzen hin ein Spalt etwa in der Breite der Materialstärke der Trägerteile verbleibt.

Die Muffenstücke müssen einerseits so lange ausgeführt sein, daß sie als umlaufende Unterlage für die Schweißnaht dienen können. Andererseits sollen sie nicht zu lange sein, damit das Ersatzträgerteil auch noch aufgesteckt werden kann, wobei die Muffenstücke aus dem konischen Bereich in Richtung auf die endseitigen Öffnungen des Ersatzträgerteils hingekippt werden. Je länger die Muffenstücke sind, umso weniger weit können diese im Rahmen ihrer Einstecktoleranzen gekippt werden. Nach Anspruch 5 ist es daher zweckmäßig, die Muffenstücke in ihrer Länge so zu wählen, daß sie etwa einem Drittel bis einem ganzen Durchmesser des Trägerprofildurchmessers entsprechen. Bei gängigen Trägerprofilen ist dies eine Länge von ca. 50 bis 60 mm.

Nach Anspruch 6 wird die konische Öffnung des Freiraums für das Ersatzträgerteil dadurch erreicht, daß der Trennschnitt schräg zum Trägerlängsverlauf geführt wird. Nach Anspruch 7 hat sich dazu ein Winkel von 30° bis 50° als zweckmäßig erwiesen. Für eine gleiche Richtung der Schräge an den Trägerstutzen und am Ersatzträgerteil können diese in einem Arbeitsgang gemeinsam bearbeitet werden: Dazu wird das Ersatzträgerteil neben den verformten Träger gelegt und beide zusammen abgeschnitten.

Eine konische Öffnung des Freiraums kann nach Anspruch 8 aber auch dadurch erreicht werden, daß der Trennschnitt stufenförmig oder sägezahnförmig hergestellt wird.

Anhand einer Zeichnung werden Ausführungsbeispiele mit weiteren Einzelheiten, Merkmalen und Vorteilen näher erläutert.

Es zeigen
- Fig. 1: eine perspektivische Teilansicht einer Fahrzeugkarosserie mit einem eingebogenen Schweller,
- Fig. 2: eine abstrahierte Darstellung des eingebogenen Schwellers nach Fig. 1 in einer Draufsicht,
- Fig. 3: eine Darstellung entsprechend Fig. 2 mit einem abgetrennten und entfernten Trägerteil und neu einzusetzenden Muffenstücken und einem Ersatzträgerteil,
- Fig. 4: eine Darstellung entsprechend Fig. 3, bei der die Einzelteile bereits zusammengesteckt und verschweißt sind,
- Fig. 5: eine vergrößerte Ansicht einer Verbindungsstelle mit einem geraden Trennschnitt und
- Fig. 6: eine vergrößerte Darstellung einer Verbindungsstelle mit einem stufenförmigen Trennschnitt.

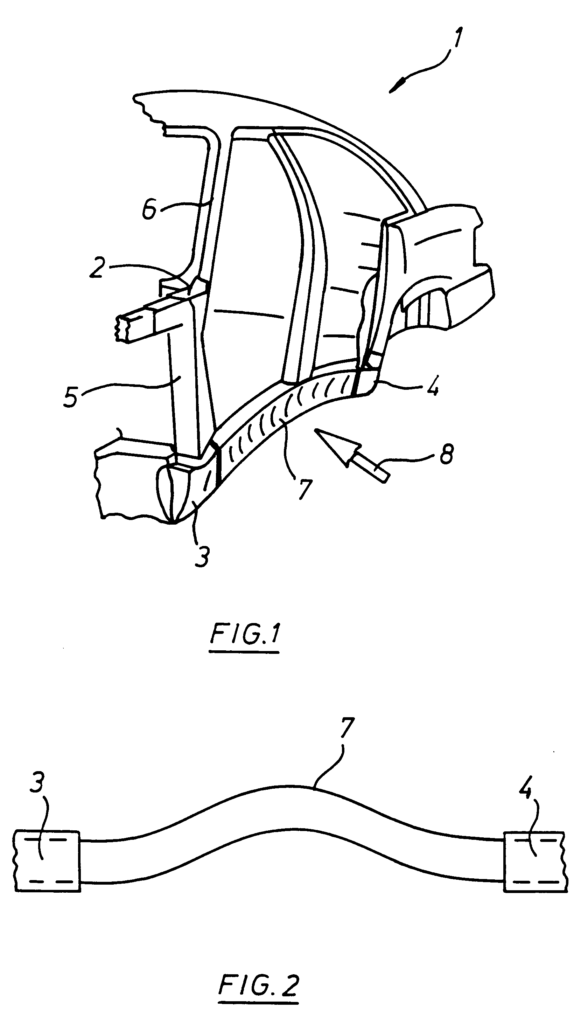

In Fig. 1 ist eine perspektivische Seitenansicht eines Teils einer Fahrzeugkarosserie dargestellt. Diese Fahrzeugkarosserie 1 ist aus Knotenelementen 2, 3, 4 als Leichtmetall-Gußteile und aus Hohlprofilträgern 5, 6 als Leichtmetall-Strangprofile aufgebaut. Zwischen den Knotenelementen 3 und 4 verläuft ein weiterer Hohlprofilträger als Schweller 7.

Der Schweller 7 ist bei einem seitlichen Aufprall (Kraftrichtung entsprechend Pfeil 8) zur Fahrzeuginnenseite hin eingebogen worden.

In Fig. 2 ist der Schweller 7 mit seinem mittleren, eingebogenen Bereich zwischen den Knotenelementen 3 und 4 in einer Draufsicht schematisch dargestellt. Die so im Schwellerbereich deformierte Karosserie soll nunmehr repariert werden, so daß nach der Reparatur wieder ein gerader Schwellerverlauf vorliegt.

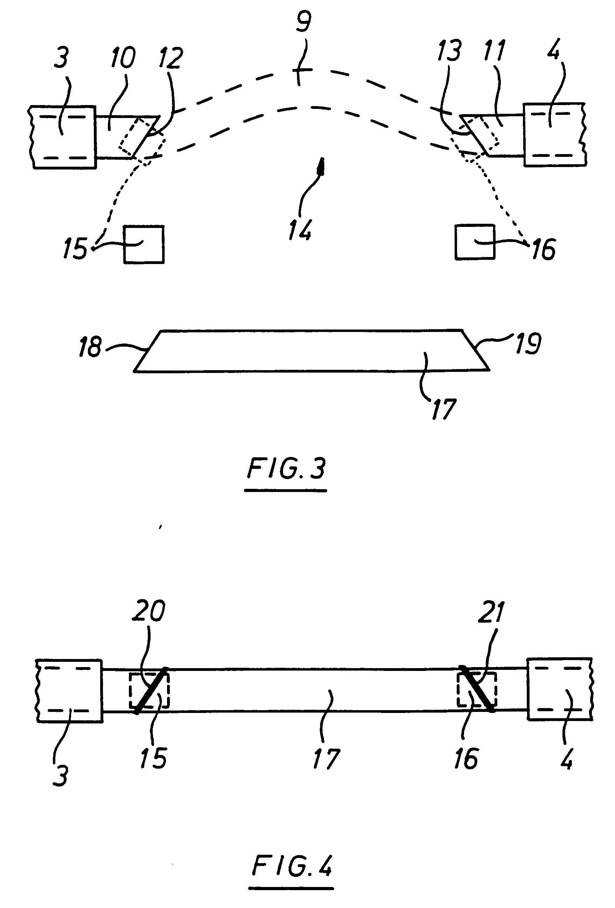

Wie aus Fig. 3 ersichtlich, wird dazu das beschädigte und eingebogene Trägerteil 9 bzw. dieser Bereich zwischen den Knotenelementen 3 und 4 abgetrennt und entfernt. Die Abtrennung erfolgt in einem Abstand vom jeweiligen Knotenelement 3 bzw. 4, so daß an jedem Knotenelement 3, 4 ein Trägerstutzen 10, 11 des ursprünglichen Schwellers 7 verbleibt.

Die Trennschnitte 12, 13 werden dabei so geführt, daß sie in einem Winkel von ca. 40° zum Schwellerlängsverlauf liegen, so daß der Freiraum 14 zwischen den Trennschnitten 12, 13 konisch zur Karosserieaußenseite hin offen ist.

In die Trägerstutzen werden kurze Muffenstücke 15 eingesteckt, die in ihrem Außenprofil dem Innenprofil der Trägerstutzen 10, 11 entsprechen.

Weiter liegt ein bereits vorbereitetes Ersatzträgerteil 17 vor, das in seiner Länge dem Freiraum 14 (minus 2 x die Materialstärke der Trägerteile zur Bildung eines Schweißspalts) entspricht und an den Endseiten ebenfalls Trennschnitte in der negativen Form der Trägerstutzenenden aufweist.

Das Ersatzträgerteil 17 wird von der konisch offenen Seite des Freiraums 14 her formschlüssig in diesen eingesetzt. Dazu werden die Muffenstücke 15, 16 im Rahmen ihrer Einstecktoleranz etwas zur Außenseite hin verkippt, wie dies strichliert eingezeichnet ist.

Nach dem Einsetzen des Ersatzträgerteils 17 ragen die Muffenstücke 15, 16 teilweise in die Trägerstutzen 10, 11 und in die Endbereiche des Ersatzteilträgers 17, so daß im Bereich der Spalte zwischen dem Ersatzteilträger 17 und den Trägerstutzen 10, 11 jeweils eine umlaufende Unterlage in der Art einer Innenmuffe gebildet ist.

Entlang jedes Spalts wird eine Schweißnaht 20, 21 angebracht, die die jeweiligen Trägerstutzen 10, 11, das zugeordnete Muffenstück 15, 16 und das Ersatzträgerteil 17 verbindet.

Die Schweißnähte 20, 21 sind ersichtlich von früheren Schweißstellen entfernt angebracht, so daß keine Verringerung der Festigkeit durch Mehrfachschweißungen an derselben Stelle auftrtt. Da der eingebogene, beschädigte Trägerteil 9 herausgeschnitten wurde, war für die Reparatur auch keine Rückformung eines Leichtmetall-Trägers erforderlich, die ebenfalls zu einem Verlust an Festigkeit und Steifigkeit geführt hätte.

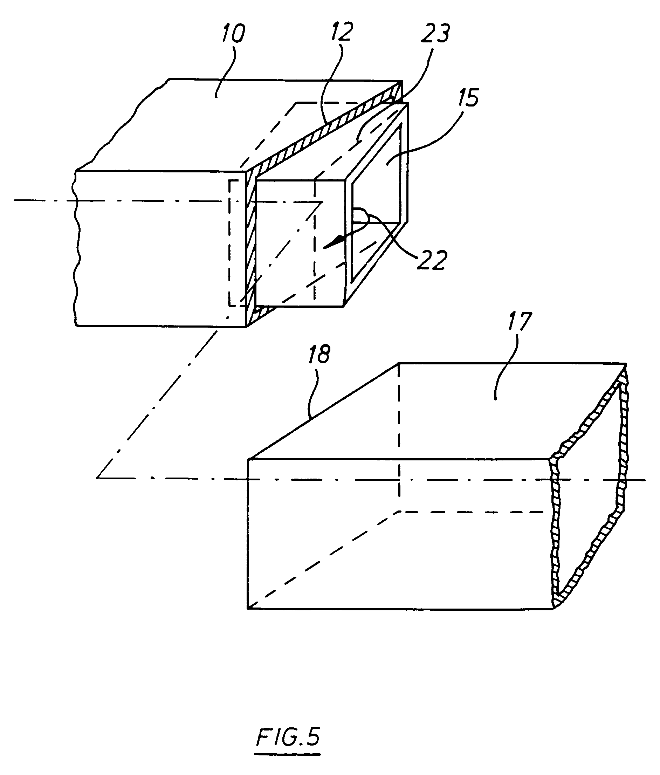

In Fig. 5 ist eine vergrößerte Darstellung der Verbindungsstelle im Bereich des Trägerstutzens 10 dargestellt. Auch hier ist der etwa um 40° gegenüber dem Längsverlauf geneigte Trennschnitt 12 zu erkennen, mit einem entsprechenden Trennschnittverlauf 18 am Ersatzträgerteil 17.

In den Trägerstutzen 10 ist das Muffenstück 15 eingesteckt, das beim Einstecken bzw. Einschieben des Ersatzträgerteils 17 entsprechend der Pfeilrichtung 22 etwas nach vorne gekippt wird.

Das Muffenstück 15 verläuft an seiner Endseite quer zur Trägerlängsrichtung. Um das Einstecken und Einschieben des Ersatzträgerteils 17 zu erleichtern, könnte das Muffenstück 15 aber auch schräg geschnitten sein, wie dies mit der strichlierten Linie 23 angedeutet ist, da auch dann noch eine Unterlage unter der Schweißnaht 20 vorhanden ist.

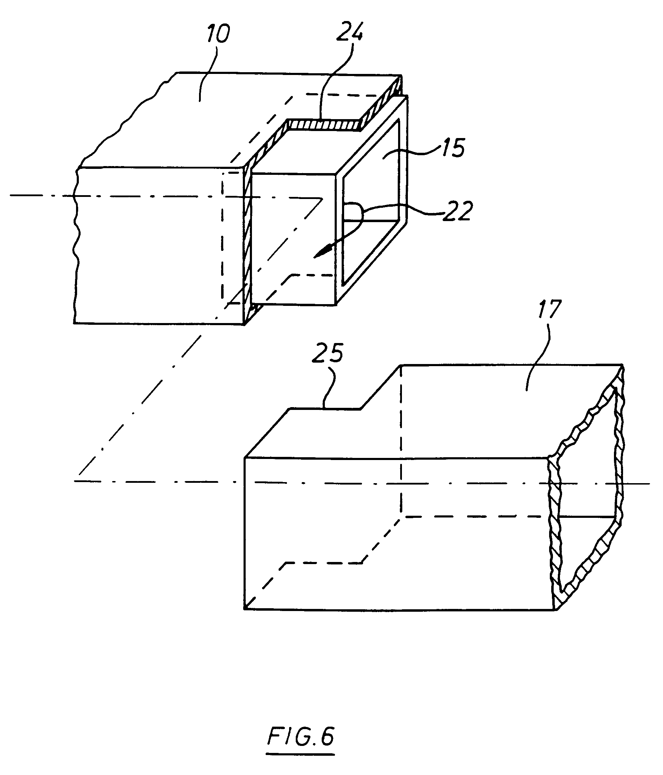

In Fig. 6 ist eine modifizierte Ausführungsform dargestellt, bei der die insgesamt konische Öffnung des Freiraums 14 durch einen stufenförmigen Trennschnitt 24 am Trägerstutzen 10 und einem entsprechenden Trennschnitt 25 am Ersatzträgerteil 17 ausgeführt ist. Auch bei dieser Schnittführung ist es erforderlich, beim Einsetzen des Ersatzträgerteils 17 das Muffenstück 15 entsprechend der Pfeilrichtung 22 etwas nach außen zu kippen. Die Schweißnaht wird auch hier entlang der Trennschnitte 24 bzw. 25 angebracht, wodurch der Trägerstutzen 10, das Muffenstück 15 und das Ersatzträgerteil 17 miteinander verbunden werden. Die Schweißnaht kann dabei so angebracht werden, daß sie in einem Spalt etwa in der Breite der Materialstärke zwischen dem Trägerstutzen 10 und dem Ersatzträgerteil 17 auf dem Muffenstück 15 liegt und damit praktisch nicht zur Außenseite hin vorsteht. Dadurch kann eine glatte Außenkontur erzielt werden, bei der für die Lackiervorbereitung nur wenig Nacharbeit erforderlich ist und bei der nicht nachträglich die Schweißnaht wieder abgeschliffen und in ihrer Festigkeit reduziert wird.

## Patentansprüche

1. Verfahren zur Reparatur einer Fahrzeugkarosserie aus Knotenelementen und Hohlprofilträgern,
dadurch gekennzeichnet,
daß ein beschädigtes Trägerteil (9) des Hohlprofilträgers (Schweller 7) zwischen zwei Knotenelementen (3, 4) abgetrennt und entfernt wird, so daß an jedem Knotenelement (3, 4) je ein Trägerstutzen (10, 11) verbleibt, zwischen denen sich dann ein Freiraum (14) in der Länge des entfernten Trägerteils (9) erstreckt,
daß die Abtrennung so erfolgt, daß durch entsprechende Anbringung der Trennschnitte (12, 13; 24) der Freiraum (14) bzw. beide Trennschnitte (12, 13; 24) gegenüber dem Längsverlauf des Hohlprofilträgers (Schweller 7) konisch offen zu einer zugänglichen Seite, insbesondere zur Karosserieaußenseite hin, verlaufen,
daß in die Trägerstutzen (10, 11) Muffenstücke (15, 16) eingesteckt werden, die in ihrem Außenprofil dem Innenprofil der Trägerstruktur (10, 11) entsprechen und die mit einem Teilbereich in den jeweiligen Trägerstutzen (10, 11) ragen und mit dem anderen Teilbereich aus dem Trägerstutzen (10, 11) vorstehen,
daß ein Ersatzträgerteil (17) vorbereitet wird, das in der Länge dem Freiraum (14) entspricht und an den Endseiten (Trennschnitte 18, 19; 25) die negative Form der Trennschnitte (12, 13; 24) der Trägerstutzen (10, 11) aufweist,
daß das Ersatzträgerteil (17) von der konisch offenen Seite des Freiraums (14) her, gegebenenfalls durch Verkippen der Muffenstücke (15, 16) in den Freiraum (14) eingesetzt wird, wobei die Muffenstücke (15, 16) jeweils im Bereich des Spaltes zwischen Ersatzträgerteil (17) und Trägerstutzen (10, 11) eine umlaufende Unterlage in der Art einer Innenmuffe bilden und
daß entlang dieses jeweiligen Spaltes eine Schweißnaht (20, 21) angebracht wird, die den Trägerstutzen (10, 11), das Muffenstück (15, 16) und das Ersatzträgerteil (17) verbindet.

2. Verfahren nach Anspruch 1, dadurch gekennzeichnet, daß die Hohlprofilträger (Schweller 7) Strangprofile aus Leichtmetall und die Knotenelemente (3, 4) Gußteile aus Leichtmetall sind.

3. Verfahren nach Anspruch 1 oder 2, dadurch gekennzeichnet, daß der Hohlprofilträger ein seitlicher Schweller (7) der Karosserie ist.

4. Verfahren nach einem der Ansprüche 1 bis 3, dadurch gekennzeichnet, daß das Ersatzträgerteil (17) so abgeschnitten wird, daß an beiden Endseiten zu den Trägerstutzen (10, 11) hin ein Spalt etwa in der Breite der Materialstärke der Trägerteile verbleibt.

5. Verfahren nach einem der Ansprüche 1 bis 4, dadurch gekennzeichnet, daß die Muffenstücke (15, 16) eine Länge entsprechend etwa einem Drittel bis einem Durchmesser des Trägerprofildurchmessers aufweisen.

6. Verfahren nach einem der Ansprüche 1 bis 5, dadurch gekennzeichnet, daß die konische Öffnung des Freiraums (14) für das Ersatzträgerteil (17) jeweils durch einen schräg zum Trägerlängsverlauf geführten Trennschnitt (12, 13) hergestellt ist.

7. Verfahren nach Anspruch 6, dadurch gekennzeichnet, daß der schräge Verlauf des Trennschnitts (12, 13) in einem Winkel von 30° bis 50° geführt ist.

8. Verfahren nach einem der Ansprüche 1 bis 5, dadurch gekennzeichnet, daß die konische Öffnung des Freiraums (14) für das Ersatzträgerteil (17) jeweils durch einen stufenförmigen oder sägezahnförmigen Trennschnitt (24) hergestellt ist.

## Claims

1. Method for repairing a vehicle bodyshell made up of gusset elements and hollow profile beams,
characterised in that
a damaged beam part (9) of the hollow profile beam (sill beam 7) is cut away between two gusset elements (3, 4) and removed, thereby leaving on each gusset element (3, 4) a respective beam connection (10, 11) between which a space (14) the length of the removed beam part (9) then extends,
the cutting away is done in such a manner that by suitable application of the severance cuts (12, 13; 24) the space (14), and the two severance cuts (12, 13; 24), run conically open to one accessible side, in particular towards the outside face of the bodyshell, relative to the longitudinal course of the hollow profile beam (sill beam 7),
into the beam connections (10, 11) are pushed sleeve pieces (15, 16) whose external profiles match the internal profile of the beam structure (10, 11) and which protrude by one sub-portion into the respective beam connection (10, 11) and project by the other sub-portion out of the beam connection (10, 11),
a replacement beam part (17) is prepared, the length of which matches the space (14) and which on the end faces (severance cuts 18, 19; 25) exhibits the negative shape of the severance cuts (12, 13; 24) of the beam connections (10, 11),
the replacement beam part (17) is inserted into the space (14) from the conically open side of the space (14), by tilting the sleeve pieces (15, 16) if necessary, and in the region of the gap between the replacement beam part (17) and the beam connection (10, 11) the sleeve pieces (15, 16) in each case form a support which runs all round in the manner of an inner sleeve, and
along said respective gap is applied a weld seam (20, 21) which joins the beam connection (10, 11), the sleeve piece (15, 16) and the replacement beam part (17).

2. Method according to claim 1, characterised in that the hollow profile beams (sill beams 7) are extruded light metal profiles and the gusset elements (3, 4) are cast light metal parts.

3. Method according to claim 1 or 2, characterised in that the hollow profile beam is a lateral sill beam (7) of the bodyshell.

4. Method according to any of claims 1 to 3, characterised in that the replacement beam part (17) is cut away so as to leave a gap, roughly the same width as the thickness of the material of the beam parts, at both end faces towards the beam connections (10, 11).

5. Method according to any of claims 1 to 4, characterised in that the sleeve pieces (15, 16) are of a length corresponding to roughly one third to once the diameter of the beam profile.

6. Method according to any of claims 1 to 5, characterised in that the conical opening of the space (14) for the replacement beam part (17) is in each case produced by a severance cut (12, 13) made diagonal to the longitudinal course of the beam.

7. Method according to claim 6, characterised in that the diagonal course of the severance cut (12, 13) runs at an angle of 30° to 50°.

8. Method according to any of claims 1 to 5, characterised in that the conical opening of the space (14) for the replacement beam part (17) is in each case produced by a stepped or sawtooth-shaped severance cut (24).

## Revendications

1. Procédé de réparation d'une carrosserie de véhicule composée d'éléments de jonction et de poutrelles à profil creux, caractérisé
en ce qu'une partie endommagée (9) de la poutrelle à profil creux (seuil de porte 7) située entre deux éléments de jonction (3, 4) est séparée et enlevée, de sorte qu'il reste, sur l'un et l'autre des éléments de jonction (3, 4), des tronçons de poutrelle (10, 11) entre lesquels un espace libre (14) s'étend alors sur la longueur de la partie de poutrelle enlevée (9),
en ce que la séparation est effectuée de telle sorte que, par une disposition appropriée des coupes de séparation (12, 13; 24), l'espace libre (14) ou les deux coupes de séparation (12, 13; 24) s'évasent, par rapport à l'étendue longitudinale de la poutrelle à profil creux (seuil de porte 7), en s'ouvrant vers un côté accessible, en particulier vers le côté extérieur de la carrosserie,
en ce qu'on insère, dans les tronçons de poutrelle (10, 11), des pièces de manchonnage (15, 16) dont le profil extérieur correspond au profil intérieur de la structure de poutrelles (10, 11) et qui pénètrent en partie dans le tronçon de poutrelle respectif (10, 11) et, pour le reste, font saillie hors des tronçons de poutrelle (10, 11),
en ce qu'on prépare une partie de poutrelle de rechange (17) dont la longueur correspond à celle de l'espace libre (14) et qui présente, à ses extrémités (coupes de séparation 18, 19; 25), une forme complémentaire de celle des coupes de séparation (12, 13; 24) des tronçons de poutrelle (10, 11),
en ce qu'on place la partie de poutrelle de rechange (17) dans l'espace libre (14), par le côté évasé de cet espace libre (14), en faisant au besoin basculer les pièces de manchonnage (15, 16), les pièces de manchonnage (15, 16) formant chacune, tout autour dans la région de la fente entre la partie de poutrelle de rechange (17) et le tronçon de poutrelle (10, 11), un support à la manière d'un manchon d'accouplement intérieur, et
en ce qu'on forme, le long de chacune de ces fentes, un cordon de soudure (20, 21) qui joint le tronçon de poutrelle (10, 11), la pièce de manchonnage (15, 16) et la partie de poutrelle de rechange (17).

2. Procédé selon la revendication 1, caractérisé en ce que les poutrelles a profil creux (seuil de porte 7) sont des profilés filés en métal léger et les éléments de jonction (3, 4) sont des pièces de fonte en métal léger.

3. Procédé selon la revendication 1 ou 2, caractérisé en ce que la poutrelle à profil creux est un seuil de porte latéral (7) de la carrosserie.

4. Procédé selon l'une quelconque des revendications 1 à 3, caractérisé en ce que la partie de poutrelle de rechange (17) est coupée de telle sorte qu'il reste, aux deux extrémités près des tronçons de poutrelle (10, 11), une fente dont la largeur correspond à peu près à l'épaisseur de matière des parties de poutrelle.

5. Procédé selon l'une quelconque des revendications 1 à 4, caractérisé en ce que les pièces de manchonnage (15, 16) ont une longueur comprise à peu près entre un tiers du calibre et le calibre du profil de la poutrelle.

6. Procédé selon l'une quelconque des revendications 1 à 5, caractérisé en ce que l'ouverture évasée de l'espace libre (14) pour la partie de poutrelle de rechange (17) est réalisée chaque fois par une coupe de séparation (12, 13) qui s'étend obliquement par rapport à l'étendue longitudinale de la poutrelle.

7. Procédé selon la revendication 6, caractérisé en ce que le tracé oblique de la coupe de séparation (12, 13) forme un angle de 30° à 50°.

8. Procédé selon l'une quelconque des revendications 1 à 5, caractérisé en ce que l'ouverture évasée de l'espace libre (14) pour la partie de poutrelle de rechange (17) est réalisée chaque fois par une coupe de séparation en gradins ou en dents de scie (24).
